# EUROPEAN PATENT APPLICATION

(11) **EP 2 159 701 A1**
(43) Date of publication of application: **03.03.2010**
(21) Application number: 07767197.2
(22) Date of filing: 19.06.2007
(51) Int. Cl.: G06F 12/08

(54) **CASH CONTROL DEVICE AND CASH CONTROL METHOD**

(71) Applicant: Fujitsu Limited, Kawasaki-shi, Kanagawa 211-8588 (JP)
(72) Inventor: SHIRAHIGE, Yuji, Kawasaki-shi Kanagawa 211-8588 (JP)
(74) Representative: Wilding, Frances Ward
(86) International application number: PCT/JP2007/062339
(87) International publication number: WO 2008/155826

(57) **Abstract**

The object is to reliably enhance processing efficiency when a pipeline process is executed on a plurality of threads. To achieve that object, when each processing unit from a cycle T processing unit (142a) to a cycle R processing unit (142d) is processing a request belonging to a stalled thread, a valid bit for the stalled thread in corresponding wait ports (143a to 143d) is set to "1". If the valid bit for any one of the threads is detected to have set to "1", a request storing unit (148) sequentially outputs requests corresponding to that valid bit to a register unit (149). Based on the valid bits, a priority determining unit (144) determines priority of the output from a selector (141). According to a select signal from the priority determining unit (144), the selector (141) outputs one of the requests.

## Description

### TECHNICAL FIELD

The present invention relates to a cache control apparatus and a cache control method that enables execution of a pipeline process on requests belonging to a plurality of threads and output of request-specific cache data, and particularly relates to a cache control apparatus and a cache control method that enables achieving enhancement in the processing efficiency in a reliable manner.

### BACKGROUND ART

Typically, a processor such as a CPU (Central Processing Unit) equipped with a cache memory executes a pipeline process to speed up operations such as an instruction fetching operation that is used in reading an instruction from the cache memory. The pipeline process is a technique in which the processing of an instruction reading request is split into a plurality of cycles (also referred to as stages) and the processing during each cycle is performed in an independent manner. That is, as soon as the processing of a particular cycle is completed with respect to a preceding request, the processing of the same cycle is performed on the next request. At the same time, the preceding request is subjected to the processing of the subsequent cycle. Thus, in a pipeline process, the processing of each cycle is performed on a plurality of requests like an assembly-line operation. That enables concurrent processing of a plurality of requests and enables achieving substantial reduction in the processing time.

While executing such a pipeline process, it is preferable that responses to requests are output in the same sequence in which the requests have been fed to a pipeline. More particularly, consider a case when a pipeline process is executed on a plurality of instruction fetching requests, for example. In that case, instructions corresponding to the requests need to be output from the cache memory in the same sequence in which the requests have been fed to a pipeline. The reason for that is as follows. Unless an instruction control unit that issues requests to the cache memory is able to retrieve the instructions in the same sequence in which the requests have been issued, then there is a possibility that the intended set of processing is not performed in a proper manner.

Meanwhile, a cache memory installed in a CPU operates faster as compared to a main memory installed outside the CPU. However, since the cache memory has a smaller memory capacity, it is not always the case that the instruction to be retrieved by a particular request is stored in the cache memory. Thus, a request issued for an instruction that is not stored in the cache memory causes a cache miss and the intended instruction is not immediately output from the cache memory. In such a case, it becomes preferable to suspend (hereinafter, "stall") processing of the pipeline in which that particular request is processed.

In that regard, for example, Patent Document 1 discloses a technique in which, in case a pipeline process is stalled, feeding of new requests to the pipeline is suspended and the requests under processing in the pipeline at the time of stalling are re-fed to the pipeline. As a result, responses to the requests that have been fed to the pipeline can be output without disturbing the feeding sequence of the requests.

Patent Document 1: Japanese Laid-open Patent Publication No. 2007-26392

### DISCLOSURE OF INVENTION

### PROBLEM TO BE SOLVED BY THE INVENTION

As described above, a pipeline process helps in speeding up the operations in a processor. Besides, in recent years, a plurality of threads each including a series of requests is concurrently subjected to pipeline process to further enhance the processing efficiency. For example, if requests belonging to two threads are alternately fed to a single pipeline, then it is possible to process both the threads in a concurrent manner. That enables achieving enhancement in the processing efficiency.

However, if processing for one of the threads is stalled in such a pipeline process, then there are certain limitations in enhancing the processing efficiency. For example, consider the case when requests belonging to two threads are alternately fed to a pipeline. In that case, if a cache miss occurs for a request belonging to one of the threads, then, according to the technique disclosed in the abovementioned Patent Document 1, all requests belonging to both the threads are re-fed to the pipeline. That is, the requests that belong to the thread with no occurrence of a cache miss and that are continually processable also get fed to the pipeline for the second time. That causes a delay in the processing of that thread.

The present invention has been made to solve the above problems in the conventional technology and it is an object of the present invention to provide a cache control apparatus and a cache control method that enable achieving enhancement in the processing efficiency in a reliable manner when a pipeline process is executed on a plurality of threads.

### MEANS FOR SOLVING PROBLEM

To solve the problems as described above, the present invention is a cache control apparatus executes a pipeline process on requests belonging to a plurality of threads and outputs request-specific cache data. The cache control apparatus is configured to include a plurality of processing units, each performing, in a mutually independent manner, corresponding processing that constitutes a pipeline process of outputting cache data with respect to requests belonging to a plurality of threads, a plurality of holding units, each being disposed corresponding to one of the processing units and each holding a thread-specific valid bit that corresponds to a request under processing in the corresponding processing unit and that indicates whether a pipeline process for a thread to which the request under processing belongs is stalled, a storing unit that sequentially stores in a register a request that is under processing in the processing unit corresponding to the holding unit holding a valid bit that indicates pipeline process stalling, and a feeding unit that determines a priority for the request stored in the register by the storing unit and a request newly input from outside, and feeds either one of stored request and newly input request to the plurality of processing units.

According to this configuration, when the pipeline process is stalled, the fact that the pipeline process is stalled is stored with respect to each thread using valid bits corresponding to the requests. Then, depending on the valid bits for each thread, target requests for repeating the pipeline process are determined. Thus, even if the pipeline process for a particular thread is stalled, the pipeline process for the other threads can be executed without interruption. That enables achieving enhancement in the processing efficiency in a reliable manner.

Further, according to the present invention with the above configuration, the storing unit is configured to store in the register a request belonging to a thread for which a pipeline process is stalled according to an order in which the request has been fed to the plurality of processing units, based on the valid bits held by the plurality of holding units.

According to this configuration, based on the valid bits, the pipeline process can be repeated, in the same sequence in which the pipeline process had started, on the requests belonging to a thread for which the pipeline process has been stalled. That is, with respect to a stalled thread, the pipeline process can be repeated without disturbing the sequence of the requests in that thread.

Further, according to the present invention with the above configuration, the feeding unit is configured to include a latching unit that latches, for each thread, the valid bits held by the plurality of holding units, and a determining unit that, according to the valid bits latched by the latching unit and a request fed at a previous time to the plurality of processing units, determines a request to be fed this time to the plurality of processing units.

According to this configuration, the valid bits for each thread are latched and, depending on the valid bits and the request with respect to which the pipeline process was started the previous time, the request to be processed this time is determined.

Further, according to the present invention with the above configuration, the determining unit is configured to determine that a request that is newly input from outside is to be fed to the plurality of processing units, when none of the valid bits latched for each thread by the latching unit indicate pipeline process stalling.

According to this configuration, if the pipeline process for none of the threads is stalled, then the pipeline process is started with respect to a request that is input newly from outside. Thus, as long as the pipeline process is being executed normally with respect to the requests under processing, processing of new requests can be started one after another.

Further, according to the present invention with the above configuration, the determining unit is configured to determine that a request that belongs to the single thread and that is stored in a register by the storing unit is to be fed to the plurality of processing units, when the valid bits latched for a single thread by the latching unit include a valid bit indicating pipeline process stalling.

According to this configuration, if the pipeline process for a single thread is stalled, then the pipeline process is started with respect to the requests belonging to that thread. That is, priority is given to starting the pipeline process with respect to the requests that are stored in a register as target requests for repeating the pipeline process. That makes it possible to promptly execute the pipeline process with respect to requests that belong to a stalled thread.

Further, according to the present invention with the above configuration, the determining unit is configured to determine that, from among the plurality of threads, a request belonging to a thread that is different than a thread to which a request fed at a previous time to the plurality of processing units belongs is to be fed to the plurality of processing units, when the valid bits latched for a plurality of threads by the latching unit include a valid bit indicating pipeline process stalling.

According to this configuration, if the pipeline process for a plurality of threads is stalled, the pipeline process is started with respect to requests belonging to a thread that is different than the threads for which the pipeline process was started the previous time. Thus, even when the pipeline process for a plurality of threads is stalled at the same time, the pipeline process is not repeated with a bias toward requests belonging to a particular thread.

Further, according to the present invention with the above configuration, the determining unit is configured to determine that, from among the plurality of threads, a request belonging to a thread that has longest elapsed time since a request belonging thereto was previously fed to the plurality of processing units is to be fed to the plurality of processing units when the valid bits latched for a plurality of threads by the latching unit include a valid bit indicating pipeline process stalling.

According to this configuration, if the pipeline process for a plurality of threads is stalled, the pipeline process is started with respect to requests belonging to a thread that has the longest elapsed time since the pipeline process was repeated on a request belonging thereto. Thus, even when the pipeline process for a plurality of threads is stalled at the same time, the pipeline process is repeated in a fair and impartial manner with respect to the requests belonging to each thread.

Further, according to the present invention with the above configuration, the storing unit is configured to include a memory unit that stores therein, by thread and to a number of the plurality of processing units, a request that has been fed to the plurality of processing units, and to store in the register, by outputting from the memory unit, a request whose corresponding valid bit indicating pipeline process stalling, in sequence starting from a request that has been initially input to the plurality of processing units.

According to this configuration, requests belonging to each thread are stored to the number of cycles in the pipeline process and the requests belonging to a stalled thread are stored in a register in sequence, starting from a request with respect to which the pipeline process was initially started. That makes it possible to reliably store the requests with respect to which the pipeline process is being executed. Moreover, while repeating the pipeline process, the sequence of requests belonging to each thread for which the pipeline process was started can be maintained.

Further, the present invention is a cache control method for executing a pipeline process on requests belonging to a plurality of threads and outputting request-specific cache data. The cache control method includes: a plurality of steps of processing operations, each in a mutually independent manner, that constitute a pipeline process of outputting cache data with respect to requests belonging to a plurality of threads; a step of setting, if a pipeline process for a thread is stalled when a request belonging to the thread has reached last of the plurality of steps of processing, a thread-specific valid bit indicating pipeline process stalling in a wait port, from among a plurality of wait ports each corresponding to one of the plurality of steps of processing, that corresponds to a step of processing at which a request belonging to the thread for which the pipeline process is stalled is under processing; a step of storing, when a valid bit indicating pipeline process stalling is set at the step of setting, a request that is under processing at a step of processing corresponding to a wait port in which the valid bit is set in a register in a sequential manner; and a step of controlling that includes determining a priority for the request stored in the register at the step of storing and a request newly input from outside, and starting the plurality of steps of processing with respect to either one of stored request and newly input request.

According to this method, when the pipeline process is stalled, the fact that the pipeline process is stalled is stored with respect to each thread using valid bits corresponding to the requests. Then, depending on the valid bits for each thread, target requests for repeating the pipeline process are determined. Thus, even if the pipeline process for a particular thread is stalled, the pipeline process for the other threads can be executed without interruption. That enables achieving enhancement in the processing efficiency in a reliable manner.

### EFFECT OF THE INVENTION

According to an aspect of the present invention, it is possible to reliably enhance the processing efficiency when a pipeline process is executed on a plurality of threads.

### BRIEF DESCRIPTION OF DRAWINGS

FIG. 1 is a block diagram of a configuration of main units of an information processing apparatus according to an embodiment.
FIG. 2 is a block diagram of an internal configuration of an instruction cache unit according to the embodiment.
FIG. 3 is a block diagram of a specific configuration of a TLB processing unit, a Tag RAM processing unit, and a data RAM processing unit involved in a pipeline process.
FIG. 4 is a schematic diagram for explaining a correspondence relation between valid bits and output ports from which target requests for re-feeding are output according to the embodiment.
FIG. 5 is a block diagram of an internal configuration of a priority determining unit according to the embodiment.
FIG. 6 is a schematic diagram for explaining a priority determining operation according to the embodiment.
FIG. 7 is a flowchart for explaining a pipeline process according to the embodiment.
FIG. 8 is a flowchart for explaining the priority determining operation according to the embodiment.
FIG. 9 is an exemplary time chart of the pipeline process according to the embodiment.
FIG. 10 is a schematic diagram for explaining the state of a request and valid bits when the pipeline process is stalled.
FIG. 11 is schematic diagram illustrating continuation from FIG. 10.
FIG. 12 is schematic diagram illustrating continuation from FIG. 11.
FIG. 13 is schematic diagram illustrating continuation from FIG. 12.
FIG. 14 is schematic diagram illustrating continuation from FIG. 13.
FIG. 15 is schematic diagram illustrating continuation from FIG. 14.
FIG. 16 is schematic diagram illustrating continuation from FIG. 15.

### EXPLANATIONS OF LETTERS OR NUMERALS

130 Instruction control unit
140 Instruction cache unit
141 Selector
142a Cycle T processing unit
142b Cycle M processing unit
142c Cycle B processing unit
142d Cycle R processing unit
143a, 143b, 143c, 143d Wait port
144 Priority determining unit
   144a-0 Register updating unit for TH0
   144a-1 Register updating unit for TH1
   144b-0 Register unit for TH0
   144b-1 Register unit for TH1
   144c Register unit for previous output
   144d Priority setting unit
145 TLB processing unit
146 Tag RAM processing unit
147 Data RAM processing unit
148 Request storing unit
149 Register unit

### BEST MODE(S) FOR CARRYING OUT THE INVENTION

An exemplary embodiment of the present invention will be described below in detail with reference to the accompanying drawings. The gist of the present invention is as follows. In case a pipeline process is stalled, then presence or absence of requests belonging to each of a plurality of threads is recorded for each cycle. Subsequently, the requests belonging to only the thread which has caused stalling in the pipeline process are re-fed to the pipeline, while processing of the requests belonging to the other threads is performed without interruption.

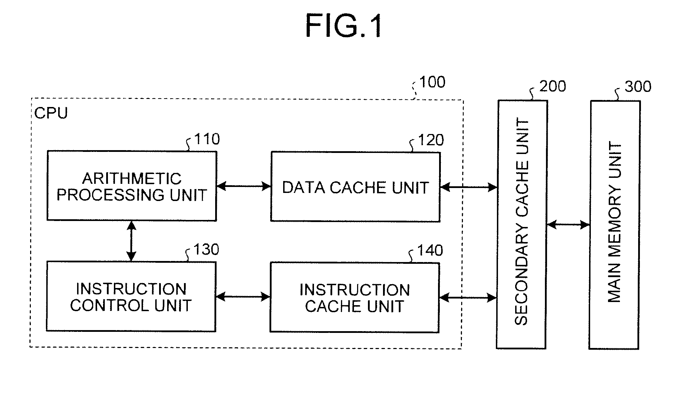

FIG. 1 is a block diagram of a configuration of main units of an information processing apparatus according to the present embodiment. The information processing apparatus illustrated in FIG. 1 includes a CPU 100, a secondary cache unit 200, and a main memory unit 300.

The CPU 100 retrieves instructions and data from the secondary cache unit 200 and the main memory unit 300, performs arithmetic processing on data according to the retrieved instructions, and writes the processed data in the secondary cache unit 200 and the main memory unit 300. The CPU 100 includes an arithmetic processing unit 110, a data cache unit 120, an instruction control unit 130, and an instruction cache unit 140.

The arithmetic processing unit 110 receives instructions from the instruction control unit 130, retrieves data from the data cache unit 120 according to the instructions, performs arithmetic processing on the data, and writes the processed data in the data cache unit 120.

The data cache unit 120 includes a cache memory used to temporarily store data that is used by the arithmetic processing unit 110. In addition, when necessary, the data cache unit 120 retrieves data from or writes data in the secondary cache unit 200.

The instruction control unit 130 issues instruction fetching requests to the instruction cache unit 140 and obtains instructions corresponding to the issued requests from the instruction cache unit 140. For that, the instruction control unit 130 administers requests belonging to each of a plurality of threads and sequentially issues the requests belonging to each thread to the instruction cache unit 140. Upon obtaining an instruction from the instruction cache unit 140, the instruction control unit 130 transfers it to the arithmetic processing unit 110.

The instruction cache unit 140 includes a cache memory used to temporarily store instructions. Moreover, upon receiving requests from the instruction control unit 130, the instruction cache unit 140 executes a pipeline process and outputs requested instructions from the cache memory to the instruction control unit 130. In addition, when necessary, the instruction cache unit 140 retrieves instructions from or writes instructions in the secondary cache unit 200. The detailed configuration and working of the instruction cache unit 140 is described later in detail.

The secondary cache unit 200 includes a cache memory used to temporarily store instructions and data, and performs communication of instructions/data with the data cache unit 120 and the instruction cache unit 140 disposed in the CPU 100. In addition, when necessary, the secondary cache unit 200 retrieves instructions/data from or writes instructions/data in the main memory unit 300.

The main memory unit 300 includes a main memory of the information processing apparatus that is used to store instructions and data for the arithmetic processing performed by the CPU 100. The frequently used instructions and data from among the information stored in the main memory unit 300 are stored in the secondary cache unit 200 or in the data cache unit and the instruction cache unit 140 disposed in the CPU 100.

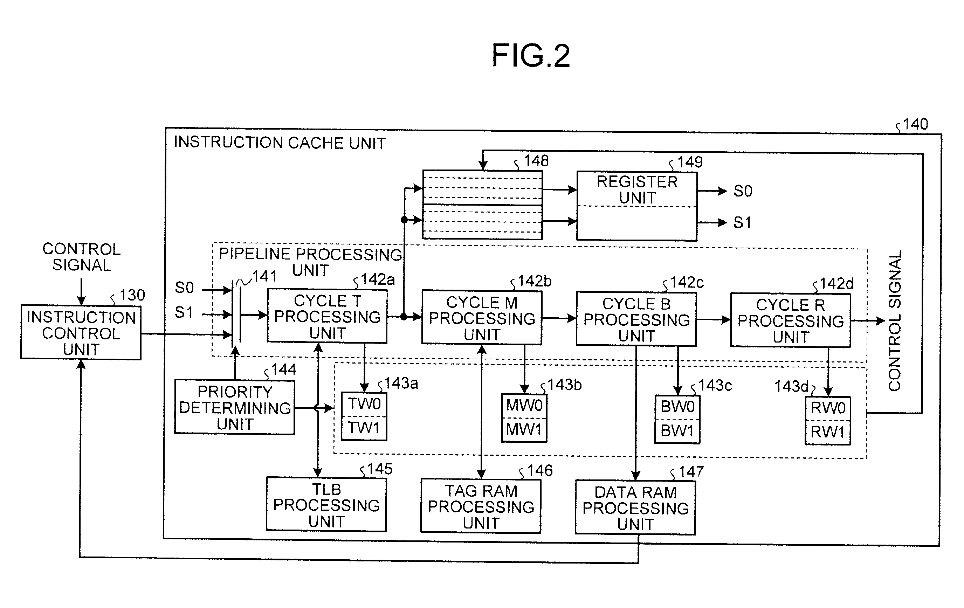

FIG. 2 is a block diagram of an internal configuration of the instruction cache unit 140 according to the present embodiment. The instruction cache unit 140 illustrated in FIG. 2 includes a selector 141, a cycle T processing unit 142a, a cycle M processing unit 142b, a cycle B processing unit 142c, a cycle R processing unit 142d, wait ports 143a to 143d, a priority determining unit 144, a TLB (Transfer look-aside buffer) processing unit 145, a Tag RAM (random access memory) processing unit 146, a data RAM processing unit 147, a request storing unit 148, and a register unit 149. Regarding the configuration of the instruction cache unit 140 illustrated in FIG. 2, it is assumed that the instruction control unit 130 issues requests belonging to two threads, namely, a thread TH0 and a thread TH1. Meanwhile, FIG. 2 only represents a functional block inside the instruction cache unit 140 and is not meant to limit the specific configuration of an instruction cache actually installed in the information processing apparatus.

The selector 141 outputs one of a thread-specific request issued by the instruction control unit 130 and thread-specific requests (illustrated as "S0" and "S1" in FIG. 2) stored in the register unit 149. More particularly, according to a select signal output by the priority determining unit 144, the selector 141 outputs the request of highest priority from among the three requests to the cycle T processing unit 142a.

The cycle T processing unit 142a accesses the TLB processing unit 145 using the virtual address of the request selected by the selector 141 and obtains a corresponding physical address. Then, the cycle T processing unit 142a outputs the physical address information along with the request to the cycle M processing unit 142b. At the same time, the cycle T processing unit 142a stores that request at a port of the request storing unit 148. More particularly, the cycle T processing unit 142a stores the request at one of a plurality of thread-specific ports of the request storing unit 148 by rotation. That is, the cycle T processing unit 142a stores the received request at the port of the request storing unit 148 which has the longest elapsed time since a request was previously stored thereat. In addition, as described later in detail, the cycle T processing unit 142a accesses a Tag RAM using the address of the request selected by the selector 141 and outputs physical addresses of way-specific data registered therein to the processing unit in the subsequent cycle. Similarly, the cycle T processing unit 142a accesses a data RAM using the address of the request selected by the selector 141 and outputs way-specific data registered therein to the processing unit in the subsequent cycle.

The cycle M processing unit 142b compares the physical address information obtained from the TLB processing unit 145 with the physical address stored in the Tag RAM of the Tag RAM processing unit 146 and determines a way. That is, the cycle M processing unit 142b uses the result of physical address matching and determines whether a requested instruction is cached in any one of a plurality of ways in the data RAM processing unit 147. If the instruction is cached in one of the ways, then the cycle M processing unit 142b specifies that way. Then, the cycle M processing unit 142b outputs the request and the information on the way in which the requested instruction is cached to the cycle B processing unit 142c.

Meanwhile, if no physical address in the Tag RAM processing unit 146 matches with the physical address information, then a cache miss occurs indicating that the requested instruction is not stored in the data RAM processing unit 147.

According to the way determined by the cycle M processing unit 142b, the cycle B processing unit 142c way-selects the data output by the data RAM in the data RAM processing unit 147 and outputs it to the instruction control unit 130. At that time, the cycle B processing unit 142c appends identification information of the request to the corresponding instruction that is to be output to the instruction control unit 130. Then, the cycle B processing unit 142c sends the request and result information, which indicates whether the corresponding instruction has been properly output from the data RAM processing unit 147, to the cycle R processing unit 142d.

Upon receiving the request and the result information, the cycle R processing unit 142d refers to the result information and verifies whether the instruction has been properly output from the data RAM processing unit 147. If that operation is properly complete, then the cycle R processing unit 142d sends a completion signal as a control signal to the instruction control unit 130. Meanwhile, if the processing needs to be stalled due to, for example, a cache miss, then the cycle R processing unit 142d sends a busy signal as a control signal to the instruction control unit 130.

The selector 141, the cycle T processing unit 142a, the cycle M processing unit 142b, the cycle B processing unit 142c, and the cycle R processing unit 142d constitute a pipeline processing unit according to the present embodiment. If the process is stalled due to, for example, a cache miss, then each of the cycle T processing unit 142a to the cycle R processing unit 142d suspend the respective processing as soon as the request that has caused stalling is input to the cycle R processing unit 142d. Besides, consider a case when, at the time of stalling, each of the cycle T processing unit 142a to the cycle R processing unit 142d is processing a request belonging to the same thread to which the request that has caused stalling also belongs. In that case, the cycle T processing unit 142a to the cycle R processing unit 142d set a valid bit for the stalled thread to "1" in the respective wait ports 143a to 143d. On the other hand, if none of the cycle T processing unit 142a to the cycle R processing unit 142d is processing a request belonging to the same thread to which the request that has caused stalling belongs, then the cycle T processing unit 142a to the cycle R processing unit 142d set the valid bit for the stalled thread to "0" in the respective wait ports 143a to 143d.

For example, assume that a cache miss occurs for a request belonging to the thread TH0 and, at the time when that request is input to the cycle R processing unit 142d, the cycle T processing unit 142a is processing a request belonging to the same thread TH0. In that case, the cycle T processing unit 142a sets a valid bit TW0 for the thread TH0 to "1" in the wait port 143a and the cycle R processing unit 142d sets a valid bit RW0 for the thread TH0 to "1" in the wait port 143d. Thus, requests belonging to a thread with the valid bit as "1" are subjected to re-feeding to the pipeline processing unit.

Along with setting the valid bit to "1" in the wait ports 143a to 143d, respectively, each of the cycle T processing unit 142a to the cycle R processing unit 142d also sets identification information of a port of the request storing unit 148 at which the respective request under processing is stored. That is, in the abovementioned example, each of the cycle T processing unit 142a and the cycle R processing unit 142d sets, in the wait ports 143a and 143d, respectively, the identification information of the port of the request storing unit 148 at which the respective request under processing is stored. The identification information of a port of the request storing unit 148 is obtained when the cycle T processing unit 142a stores a request at that port. That identification information is input to each of the other processing units along with the corresponding request.

Each of the wait ports 143a to 143d stores therein thread-specific valid bits. Each thread-specific valid bit in the wait ports 143a to 143d can be set to "0" or "1" depending on the processing status in the cycle T processing unit 142a to the cycle R processing unit 142d, respectively. More particularly, each of the wait ports 143a to 143d stores therein two valid bits, one for the thread TH0 and one for the thread TH1. For example, the wait port 143a stores therein the valid bit TW0 for the thread TH0 and a valid bit TW1 for the thread TH1. In a similar manner, each of the wait ports 143b to 143d store therein valid bits MW0 and MW1, BW0 and BW1, and RW0 and RW1, respectively. In the default state, each valid bit is set "0".

If the pipeline process for any one thread is stalled, then "1" is set in the valid bit for the stalled thread from among the two valid bits in each of the wait ports 143a to 143d, which correspond to the cycle T processing unit 142a to the cycle R processing unit 142d, respectively, that are processing requests belonging to the same stalled thread. At the same time, the identification information of a port of the request storing unit 148 at which the request for which the valid bit is set to "1" is stored in each of the wait ports 143a to 143d. Thus, the valid bit corresponding to the request that needs to be re-fed to the pipeline processing unit due to stalling is set to "1" in each of the wait ports 143a to 143d. Such valid bit setting is performed with respect to each thread.

Subsequently, the valid bit corresponding to the request selected by the selector 141 is changed from "1" to "0" in each of the wait ports 143a to 143d. That is, since the request selected by the selector 141 is the one that has been re-fed to the pipeline processing unit, the corresponding valid bit is reset to "0", which indicates the default state.

The priority determining unit 144 refers to the valid bits in the wait ports 143a to 143d, determines the priority of the output from the selector 141, and outputs a select signal specifying the request to be output to the selector 141. At that time, if "1" is set in any of the valid bits TW0, MW0, BW0, and RW0 for the thread TH0, then the priority determining unit 144 assigns higher priority to the request S0 stored in the register unit 149 for re-feeding. Similarly, if "1" is set in any of the valid bits TW1, MW1, BW1, and RW1 for the thread TH1, then the priority determining unit 144 assigns higher priority to the request S1 stored in the register unit 149 for re-feeding. Meanwhile, the detailed configuration and working of the priority determining unit 144 is described later in detail.

The TLB processing unit 145 stores therein the correspondence relation between the virtual addresses of instructions requested by the instruction control unit 130 and the physical addresses at which the instructions are actually stored. Upon being accessed by the cycle T processing unit 142a, the TLB processing unit 145 sends to the cycle T processing unit 142a the physical address information on an instruction requested by a request that has been input to the cycle T processing unit 142a.

The Tag RAM processing unit 146 stores therein physical addresses in the main memory unit 300 at which instructions cached in the data RAM processing unit 147 are stored. The Tag RAM processing unit 146 provides to the cycle M processing unit 142b the physical addresses of way-specific lines that have been accessed by the cycle T processing unit 142a. That is, the Tag RAM processing unit 146 provides to the cycle M processing unit 142b the physical addresses of instructions stored in the data RAM processing unit 147.

The data RAM processing unit 147 includes, for example, a cache memory having a set-associative scheme and stores instructions that are frequently requested by the instruction control unit 130 in each of a plurality of ways. The data RAM processing unit 147 outputs the instruction that has been way-selected by the cycle B processing unit 142c to the instruction control unit 130.

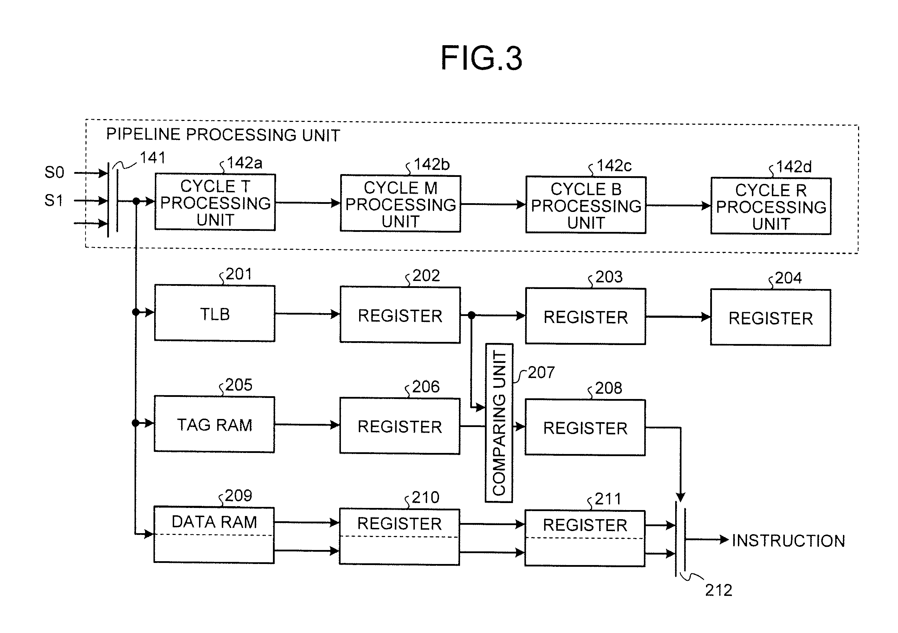

Given below is the description with reference to FIG. 3 of a specific configuration and processing details of the TLB processing unit 145, the Tag RAM processing unit 146, and the data RAM processing unit 147 during a pipeline process. Below each of the cycle T processing unit 142a to the cycle R processing unit 142d in FIG. 3 is illustrated a configuration for the corresponding cycle.

First, during the cycle T, a TLB 201 that stores therein the correspondence relation between virtual addresses and physical addresses outputs to a register 202 the physical address information corresponding to virtual address information attached to a particular request. At the same time, a Tag RAM 205 outputs to a register 206 a physical address of an instruction in the line specified by the request. Moreover, a data RAM 209, which stores an instruction in each of a plurality of ways (two ways in FIG. 3), outputs to a register 210 the instructions stored in all of the ways.

Subsequently, during the cycle M, a comparing unit 207 compares the physical address information stored in the register 202 with the physical address for each way stored in the register 206 and outputs to a register 208 way information regarding the data RAM 209, which stores therein the instruction for which the physical address matches with the physical address information. The way information indicates a way of the data RAM 209 that stores therein the instruction requested by the instruction control unit 130. Moreover, during the cycle M, the way-specific instructions stored in the register 210 are output to a register 211.

Subsequently, during the cycle B, a selector 212 outputs, from among the way-specific instructions stored in the register 211, an instruction corresponding to the way information stored in the register 208. As a result, from among the instructions stored in each of a plurality of ways of the data RAM 209, the instruction control unit 130 obtains the instruction corresponding to the issued request. Moreover, during the cycle B, the physical address information stored in the register 202 is stored in a register 203. Then, during the subsequent cycle R, the physical address information is stored in a register 204.

In this way, before performing processing during each cycle, the physical address information on the requested instruction, the physical address of the accessed line from among the physical addresses stored in the Tag RAM 205, and the instruction in the accessed line from among the instructions stored in the data RAM 209 are stored in the register corresponding to that cycle. That makes it possible to perform processing during each cycle in an independent manner. As a result, a pipeline process can be executed in which the processing of a plurality of requests is performed concurrently like an assembly-line operation. Meanwhile, for clarity in the description of the present embodiment, it is assumed that the pipeline processing unit illustrated in FIG. 2, the TLB processing unit 145, the Tag RAM processing unit 146, and the data RAM processing unit 147 perform the abovementioned processing.

The request storing unit 148 includes, for each thread, four ports corresponding to the cycle T to the cycle R in the pipeline processing unit. Each request output from the cycle T processing unit 142a is temporarily stored in one of the ports for the corresponding thread. The request storing unit 148 monitors the valid bits in the wait ports 143a to 143d and, if the valid bit for any one of the threads is detected to have changed to "1", sequentially outputs the requests corresponding to that valid bit from the ports to the register unit 149.

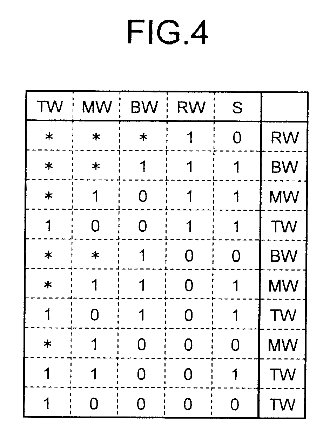

More particularly, the request storing unit 148 monitors the four valid bits for each thread and determines a port for outputting a request according to a table illustrated in FIG. 4. The table illustrated in FIG. 4 is used for the thread TH0 as well as the thread TH1. The table indicates the correspondence relation between the values of four valid bits TW to RW and the wait ports 143a to 143d that store therein the identification information of output ports from which requests are output. In FIG. 4, "S" indicates whether a request is stored in the register unit 149. When "S" is "1", it indicates that the request is stored in the register unit 149; while when "S" is "0", it indicates that the register unit 149 is free. Moreover, in FIG. 4, the symbol "*" indicates that the corresponding value bears no relation with determining output ports. For example, consider a case when the valid bit RW is "1" and the register unit 149 is free. In that case, irrespective of the values of the other valid bits, the port having identification information stored in the wait port 143d, which stores therein the valid bit RW, is determined as the output port.

As is clear from FIG. 4, when the register unit 149 is free, the earliest request that has been fed to the pipeline processing unit is output to the register unit 149. On the other hand, if the register unit 149 is holding a request, then the request that has been fed to the pipeline processing unit subsequent to the request being held by the register unit 149 is output to the register unit 149 as soon as it becomes free. For example, consider a case when the register unit 149 is holding a request with the valid bits BW and RW set to "1". In that case, the request held by the register unit 149 corresponds to the valid bit RW. Since that request is not re-fed to the pipeline processing unit, it can be said that the valid bit RW is not yet reset to "0". Then, with reference to FIG. 4, the port having identification information stored in the wait port 143c, which stores therein the valid bit BW, is determined as the output port. As soon as the register unit 149 becomes free, the request storing unit 148 outputs the request corresponding to the valid bit BW to the register unit 149. As a result, the sequence in which the requests are stored in the register unit 149 is same as the sequence in which the requests have been fed to the pipeline processing unit.

Subsequently, the priority determining unit 144 sets "0" in that valid bit in the wait ports 143a to 143d which corresponds to the request that has been output from the output port and re-fed to the pipeline processing unit. That is, in the abovementioned example, the request storing unit 148 outputs the request from the output port having the identification information stored in the wait port 143d that stores therein the valid bit RW. Subsequently, the priority determining unit 144 changes the valid bit RW from "1" to "0" when the selector 141 selects the corresponding request. At that time, since the register unit 149 becomes free, the request storing unit 148 outputs the request corresponding to the valid bit BW to the register unit 149.

Consider another example when the pipeline process for the thread TH0 is stalled and the requests belonging to the thread TH0 have been input to, for example, the cycle T processing unit 142a and the cycle R processing unit 142d. In that case, the valid bits TW0 and RW0 are set to "1". Since the valid bit RW0 is "1", the request storing unit 148 refers to the table illustrated in FIG. 4 and outputs a request from the port having identification information stored in correspondence with the valid bit RW0. When that request is re-fed to the pipeline processing unit via the selector 141, the priority determining unit 144 changes the valid bit RW0 to "0". Consequently, only the valid bit TW0 remains as "1". Then, the request storing unit 148 refers to the table illustrated in FIG. 4 and outputs a request for the port having identification information stored in correspondence with the valid bit TW0.

In this way, when the pipeline process for any one thread is stalled, the request storing unit 148 refers to the table illustrated in FIG. 4 and determines an output port for outputting a request. For that reason, latter the cycle for a request under processing, earlier is the output of that request to the register unit 149 from the request storing unit 148. As a result, the earliest request that has been fed to the pipeline processing unit becomes a target for re-feeding by priority. That enables maintaining the feeding sequence of requests belonging to each thread.

The register unit 149 holds the request that has been output from the request storing unit 148 by the corresponding thread and outputs it to the selector 141. The period for which the register unit 149 holds a request represents a cycle in which the priority determining unit 144 determines the priority of requests to be output. That cycle in the pipeline process is referred to as a cycle P. Thus, in the pipeline process according to the present embodiment, processing during the cycle P, the cycle T, the cycle M, the cycle B, and the cycle R is repeated in that order.

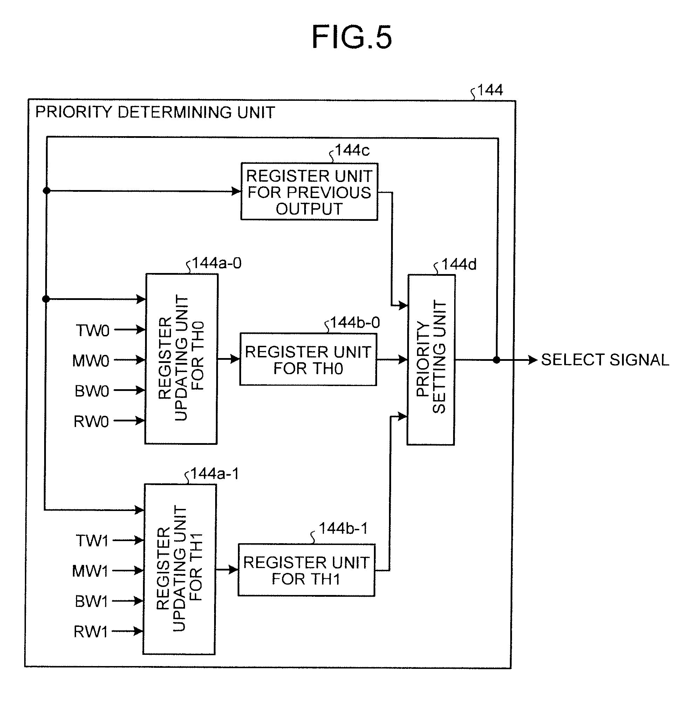

FIG. 5 is a block diagram of an internal configuration of the priority determining unit 144 according to the present embodiment. The priority determining unit 144 according to the present embodiment illustrated in FIG. 5 includes a register updating unit 144a-0 for the TH0 thread, a register updating unit 144a-1 for the TH1 thread, a register unit 144b-0 for the TH0 thread, a register unit 144b-1 for the TH1 thread, a register unit for previous output 144c, and a priority setting unit 144d.

Even if only one of the four valid bits corresponding to the thread TH0 is "1" (i.e., "valid"), then the register updating unit 144a-0 sets "1" in the register unit 144b-0. Similarly, even if only one of the four valid bits corresponding to the thread TH1 is "1" (i.e., "valid"), the register updating unit 144a-1 sets "1" in the register unit 144b-1. Moreover, if either one of the thread TH0 and the thread TH1 is selected according to a select signal, then the register updating unit 144a-0 or the register updating unit 144a-1 respectively resets "0" in the register unit 144b-0 or the register unit 144b-1. Meanwhile, in the case of a conflict between setting "1" and resetting "0" in the register units 144b-0 and 144b-1, the register updating units 144a-0 and 144a-1 give priority to setting "1".

Thus, in case the pipeline process for either the thread TH0 or the thread TH1 is stalled such that the corresponding requests need to be re-fed, then the register updating unit 144a-0 or the register updating unit 144a-1 respectively sets "1" in the register unit 144b-0 or the register unit 144b-1 depending on the stalled thread.

Thus, the thread-specific register units 144b-0 and 144b-1 are updated by the register updating units 144a-0 and 144a-1, respectively. Then, each of the register units 144b-0 and 144b-1 outputs the value of "0" or "1" set therein to the priority setting unit 144d at each clock corresponding to the processing time during a single cycle.

The register unit for previous output 144c holds "0" if the select signal output at the previous time by the priority setting unit 144d indicates re-feeding of the requests belonging to the thread TH0 and holds "1" if the select signal output at the previous time by the priority setting unit 144d indicates re-feeding of the requests belonging to the thread TH1. Moreover, if the select signal output at the previous time indicates feeding of a new request from the instruction control unit 130, then the register unit for previous output 144c continues to hold the current value.

Based on the bit values held by the register units 144b-0 and 144b-1, and the register unit for previous output 144c, the priority setting unit 144d sets the priority of the requests that are input to the selector 141 and outputs a select signal specifying the request to be output to the selector 141.

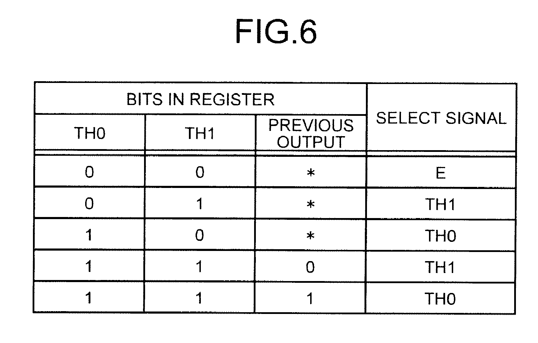

More particularly, the priority setting unit 144d sets the priority of requests by referring to a table illustrated in FIG. 6 and outputs a select signal. FIG. 6 is a table of correspondence relation between the bit value in each of the register unit 144b-0 for the TH0 thread, the register unit 144b-1 for the TH1 thread, and the register unit for previous output 144c, and a select signal. With reference to FIG. 6, a select signal E prompts the selector 141 to output a request that is newly input from the instruction control unit 130; a select signal TH0 prompts the selector 141 to output a request belonging to the thread TH0 that is re-fed from the register unit 149; and a select signal TH1 prompts the selector 141 to output a request belonging to the thread TH1 that is re-fed from the register unit 149. Moreover, the symbol "*" in FIG. 6 indicates that the corresponding value bears no relation with setting priority of requests. For example, if each of the register units 144b-0 and 144b-1 holds the bit of value "0", then, irrespective of the bit value held by the register unit for previous output 144c, the priority setting unit 144d outputs the select signal E indicating that priority is given to the request that has been output from the instruction control unit 130.

As is clear from FIG. 6, if the register unit 144b-0 as well as the register unit 144b-1 holds "0", then the priority setting unit 144d gives priority to the request that has been newly output from the instruction control unit 130. If either one of the register units 144b-0 and 144b-1 holds "1", then the priority setting unit 144d gives priority to the request that belongs to the thread corresponding to the register unit holding "1".
This means that, when the pipeline process for a particular thread is stalled, the requests belonging to that thread are given the highest priority in re-feeding to the cycle T processing unit 142a from the register unit 149.

On the other hand, if the register unit 144b-0 as well as the register unit 144b-1 holds "1", then the priority setting unit 144d refers to the bit value held by the register unit for previous output 144c and outputs a select signal indicating selection of a request that belongs to the thread other than the previously selected thread. That is, when the pipeline process for both the threads TH0 and TH1 is stalled, the priority setting unit 144d makes sure that the requests belonging to the threads TH0 and TH1 are alternately re-fed to the cycle T processing unit 142a.

Meanwhile, in the present embodiment, it is assumed that the requests belonging to the thread TH0 and the thread TH1 are concurrently input to the instruction cache unit 140. In the case of a concurrent input of requests belonging to three or more threads to the instruction cache unit 140, the cycle T processing unit 142a can be re-fed with the requests belonging to each thread by rotation. At that time, the priority setting unit 144d can employ a LRU (Least Recently Used) method such that those requests are re-fed which belong to a thread having the longest elapsed time since a request belonging thereto was previously re-fed. Moreover, the priority setting unit 144d outputs a select signal after a predetermined time elapses since "1" is set in either one of the register unit 144b-0 for the TH0 thread and the register unit 144b-1 for the TH1 thread.

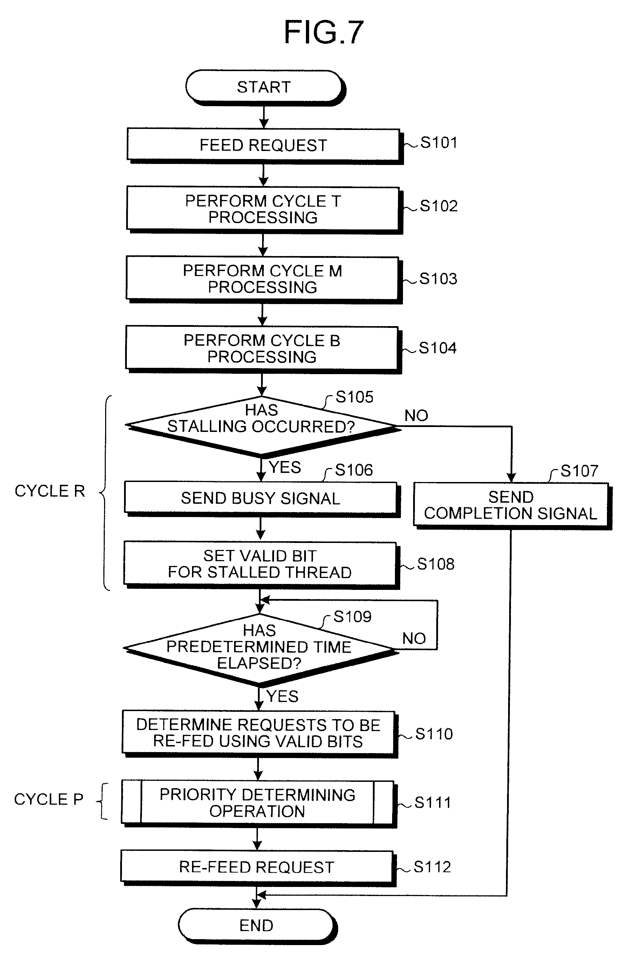

Given below is the description with reference to a flowchart illustrated in FIG. 7 of a pipeline process executed in the instruction cache unit 140 having the abovementioned configuration. The flowchart illustrated in FIG. 7 represents a pipeline process executed on a single request in the instruction cache unit 140. While that request is being processed, the processing on other requests of the same thread or of another thread is performed like an assembly-line operation.

First, a thread-specific request is fed to the pipeline processing unit (Step S101) and input to the cycle T processing unit 142a via the selector 141. At that time, the priority determining unit 144 performs a priority determining operation in the selector 141. However, herein it is assumed that a request newly input from the instruction control unit 130 is given priority. Thus, the explanation of the priority determining operation is skipped. The priority determining operation in the selector 141 corresponds to the processing during the cycle P, which is the first cycle in the pipeline process.

Upon receiving the request, the cycle T processing unit 142a obtains from the TLB processing unit 145 the physical address information corresponding to the virtual address information that has been input along with the fed request (Step S102). The physical address information obtained by the cycle T processing unit 142a includes the physical address in the main memory unit 300 at which the instruction requested by the instruction control unit 130 is stored. Then, the cycle T processing unit 142a outputs the obtained physical address information and the request to the cycle M processing unit 142b. In addition, the cycle T processing unit 142a selects one of the ports, which corresponds to the thread to which the received request belongs, in the request storing unit 148. Then, the cycle T processing unit 142a stores the request at that port and obtains the identification information of that port. Among the ports corresponding to the thread to which the received request belongs, the port selected by the cycle T processing unit 142a has the longest elapsed time since a request was previously stored thereat. This processing corresponds to the processing during the cycle T.

Upon receiving the physical address information and the request, the cycle M processing unit 142b determines whether a physical address matching with the input physical address information is stored in the Tag RAM processing unit 146 (Step S103) and determines a way in the data RAM processing unit 147 in which the instruction requested by the instruction control unit 130 is stored. Then, the cycle M processing unit 142b outputs the request and the way information of the data RAM processing unit 147 in which the instruction is stored to the cycle B processing unit 142c. At that time, if no physical address in the Tag RAM processing unit 146 matches with the physical address information that has been input in the cycle M processing unit 142b, then a cache miss occurs indicating that the instruction requested by the instruction control unit 130 is not stored in the data RAM processing unit 147. In that case, the cycle M processing unit 142b sends a cache miss notification to the cycle B processing unit 142c. This processing corresponds to the processing during the cycle M.

Upon receiving the way information and the request, the cycle B processing unit 142c outputs the requested instruction to the instruction control unit 130 via the way in the data RAM processing unit 147 as specified in the way information (Step S104). Unless a cache miss has occurred, the instruction requested by the instruction control unit 130 is output from the data RAM processing unit 147. The instruction control unit 130 receives that instruction and transfers it to the arithmetic processing unit 110. However, in the case of a cache miss, the instruction is not output from the data RAM processing unit 147 to the instruction control unit 130. The cycle B processing unit 142c sends the request and the result information, which indicates whether the instruction has been properly output from the data RAM processing unit 147, to the cycle R processing unit 142d.

Upon receiving the request and the result information, the cycle R processing unit 142d refers to the result information and determines whether it is necessary to suspend the pipeline process due to, for example, a cache miss (Step S105). If it is determined that the processing up to the cycle B is properly completed and the instruction has been output from the data RAM processing unit 147 to the instruction control unit 130 (No at Step S105), then the cycle R processing unit 142d sends a completion signal as a control signal to the instruction control unit 130 (Step S107). The completion signal notifies that the pipeline process is completed. In that case, the abovementioned processing corresponds to the processing during the cycle R. That marks the completion of the pipeline process on a single request.

However, if processing for any one thread is stalled due to, for example, a cache miss (Yes at Step S105), then the cycle R processing unit 142d sends a busy signal as a control signal to the instruction control unit 130 (Step S106). The busy signal notifies that the pipeline process in the instruction cache unit 140 is in a busy state and includes information on the thread for which the pipeline process has been stalled. Upon receiving the busy signal, the instruction control unit 130 stops outputting requests belonging to the thread for which the pipeline process has been stalled to the instruction cache unit 140.

In case the pipeline process is stalled, each of the cycle T processing unit 142a to the cycle R processing unit 142d in the pipeline processing unit verifies the thread to which the respective request under processing belongs. If the request under processing in any of the cycle T processing unit 142a to the cycle R processing unit 142d belongs to the thread for which the pipeline process has been stalled, then the valid bit in the corresponding wait port from among the wait ports 143a to 143d is set to "1" (Step S108). For example, consider a case when the pipeline process for the thread TH0 is stalled and, at the time when the request that has caused a cache miss is input to the cycle R processing unit 142d, the cycle M processing unit 142b is processing a request belonging to the same thread TH0. In that case, the cycle M processing unit 142b sets the valid bit TW0 for the thread TH0 to "1" in the wait port 143b and the cycle R processing unit 142d sets the valid bit RW0 for the thread TH0 to "1" in the wait port 143d. On the other hand, if none of the cycle T processing unit 142a to the cycle R processing unit 142d is processing a request belonging to the thread for which the pipeline process has been stalled, the valid bit in the wait ports 143a to 143d is set to "0". When the pipeline process is stalled, the abovementioned processing corresponds to the processing during the cycle R.

In the abovementioned pipeline process, the processing is suspended only for the thread that has caused stalling. That is, the processing is continued for the other threads that have not caused stalling. For example, if the pipeline process for the thread TH0 is stalled but the pipeline process for the thread TH1 is being performed normally, then the pipeline process for the thread TH1 is continually executed irrespective of the pipeline process for the thread TH0. Thus, even if the pipeline process for a particular thread is stalled while executing the pipeline process concurrently for a plurality of threads, then the pipeline process for the other threads is executed without interruption. That enables achieving enhancement in the processing efficiency in a reliable manner.

When the valid bits for the stalled thread is set to "1", the corresponding processing is kept in a suspended state for a predetermined time (Step S109) and, after the predetermined time has elapsed (Yes at Step S109), the request storing unit 148 that monitors the valid bits and determines the request to be re-fed to the pipeline processing unit (Step S110). More particularly, the request storing unit 148 refers to the table illustrated in FIG. 4 and the requests of the thread with the valid bits set to "1" are sequentially re-fed to the pipeline processing unit. That is, since the wait ports 143a to 143d stored therein the thread-specific valid bits, the requests belonging to the stalled thread are sequentially determined as target requests for re-feeding. At that time, as is clear from FIG. 4, the earliest request that has been fed to the pipeline processing unit becomes a target request for re-feeding by priority. That enables maintaining the feeding sequence of requests belonging to each thread.

To the valid bits in each of the wait ports 143a to 143d is associated the identification information of the port of the request storing unit 148 at which the request is stored. Thus, the request storing unit 148 refers to the table illustrated in FIG. 4 and outputs the request to the register unit 149 from that port which corresponds to the valid bit determined for the target request for re-feeding. The register unit 149 then holds the output request. At the same time, the request storing unit 148 resets to "0" those valid bits in the wait ports 143a to 143d which correspond to the requests output to the register unit 149.

Once the register unit 149 holds the target request for re-feeding, the priority determining unit 144 performs the priority determining operation to determine the priority of the output from the selector 141 (Step S111). The register unit 149 holds the request for the period of the priority determining operation, which corresponds to the processing during the cycle P. Herein, since the priority determining operation is performed for the target request for re-feeding, it is illustrated as the last operation in FIG. 7. However, since the priority determining operation is actually performed to detect request to be fed to the pipeline processing unit, it is the initial operation in the pipeline process. The details of the priority determining operation are described later.

Once the priority determining unit 144 performs the priority determining operation and determines that the target request for re-feeding is to be output from the selector 141, the request stored in the register unit 149 is re-fed to the cycle T processing unit 142a via the selector 141 (Step S112). Thereafter, the pipeline process is repeated from the processing during the cycle T described at Step S102. In this way, with respect to a stalled thread, the pipeline process is repeated without disturbing the sequence of the requests in that thread.

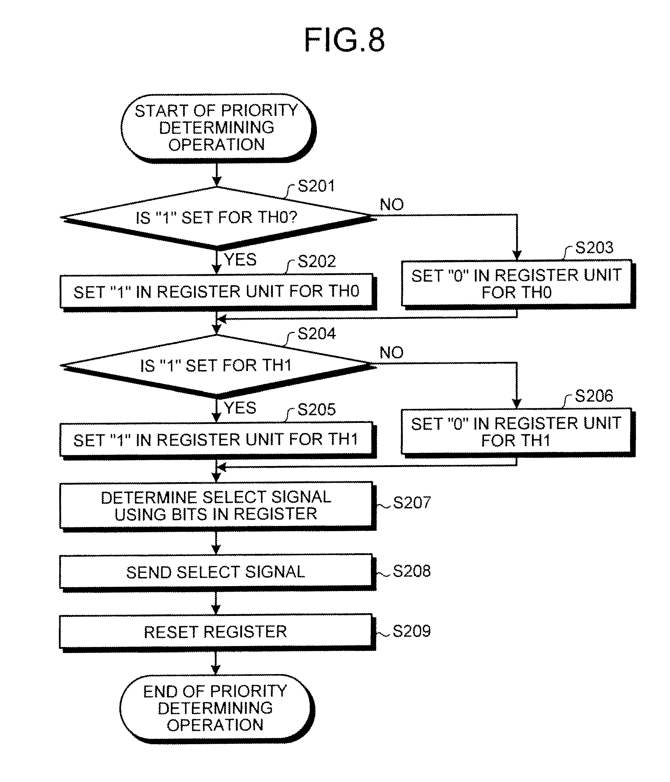

Given below is the description with reference to a flowchart illustrated in FIG. 8 of the priority determining operation according to the present embodiment.

First, the register updating unit 144a-0 determines whether any of the valid bits for the thread TH0 in the wait ports 143a to 143d (TW0, MW0, BW0, and RW0) are set to "1" (Step S201). If even one of those valid bits is set to "1" (Yes at Step S201), then the register updating unit 144a-0 stores a bit of value "1" in the register unit 144b-0 for the TH0 thread (Step S202). On the other hand, if no valid bit set to "1" is found (No at Step S201), then the register updating unit 144a-0 is maintained at the default state with a bit of value "0" (Step S203).

In an identical manner, the register updating unit 144a-1 determines whether any of the valid bits for the thread TH1 in the wait ports 143a to 143d (TW1, MW1, BW1, and RN1) are set to "1" (Step S204). If even one of those valid bits is set to "1" (Yes at Step S204), then the register updating unit 144a-1 stores a bit of value "1" in the register unit 144b-1 for the TH1 thread (Step S202). On the other hand, if no valid bit set to "1" is found (No at Step S204), then the register updating unit 144a-1 is maintained at the default state with a bit of value "0" (Step S206).

Based on the bit values held by the register units 144b-0 and 144b-1, and the register unit for previous output 144c, the priority setting unit 144d sets the priority of the output from the selector 141 and determines a select signal (Step S207). The select signal is determined using the table illustrated in FIG. 6 and the determined select signal is output to the selector 141 (Step S208).

That is, if the register unit 144b-0 as well as the register unit 144b-1 holds the bit of value "0", then the priority setting unit 144d outputs to the selector 141 the select signal E indicating that priority is given to the request that has been newly output from the instruction control unit 130. If only one of the register units 144b-0 and 144b-1 holds the bit of value "1", then the priority setting unit 144d outputs to the selector 141 the select signal TH0 or the select signal TH1 indicating that priority is given to the request that belongs to the thread corresponding to the register unit holding the value of "1".

On the other hand, if the register unit 144b-0 as well as the register unit 144b-1 holds the bit of value "1", then the priority setting unit 144d refers to the contents of the register unit for previous output 144c and outputs the select signal TH0 or the select signal TH1 indicating that priority is given to the request belonging to the thread that is different than the thread to which the previously-prioritized request belonged. For example, if the select signal TH0 was output at the previous time indicating priority to the request belonging to the thread TH0, then the select signal TH1 is output this time indicating priority to the request belonging to the thread TH1. Thus, even when the pipeline process for a plurality of threads is stalled at the same time, the requests belonging to all of the threads are fairly and impartially re-fed to the pipeline processing unit. As a result, it is possible to eliminate bias in the processing time for the threads.

Once the select signal is output to the selector 141, the register unit 144b-0 or the register unit 144b-1 corresponding to the selected thread is reset (Step S209). That marks the completion of the priority determining operation. The priority determining operation corresponds to the processing during the cycle P for requests belonging to each thread and is performed to determine whether to feed (or re-feed) the requests to the pipeline processing unit.

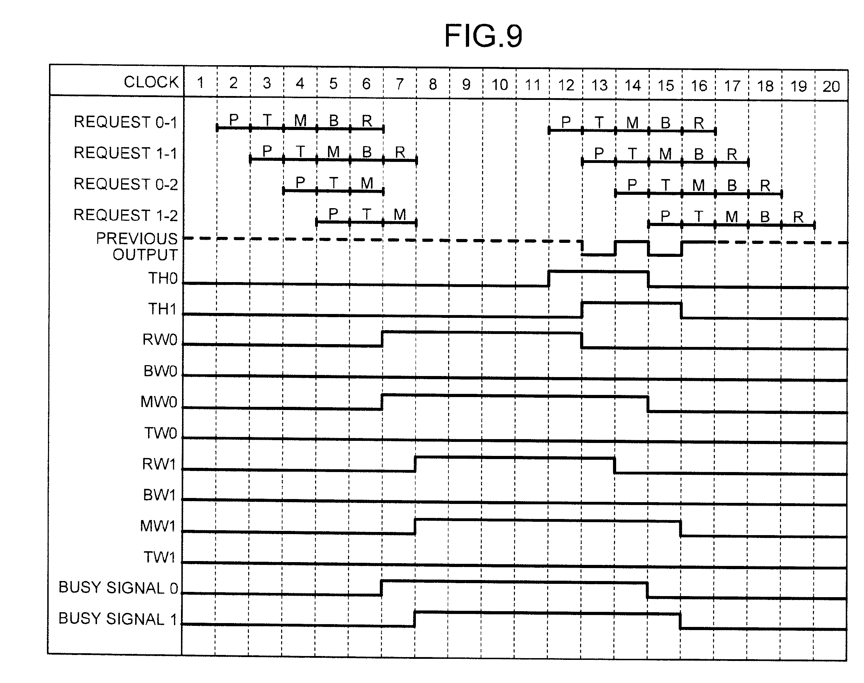

Given below is the description of a specific example of the pipeline process with reference to FIGS. 9 to 16. FIG. 9 is a time chart for explaining the state of bits and a busy signal in each register unit when requests 0-1 and 0-2 belonging to the thread TH0 and requests 1-1 and 1-2 belonging to the thread TH1 are fed to the instruction cache unit 140 according to the present embodiment.

Herein, it is assumed that the requests belonging to the thread TH0 and the requests belonging to the thread TH1 are alternately fed to the instruction cache unit 140. The processing during the cycle P on the request 0-1 starts in a clock 2, the processing during the cycle P on the request 1-1 starts in a clock 3, the processing during the cycle P on the request 0-2 starts in a clock 4, and the processing during the cycle P on the request 1-2 starts in a clock 5.

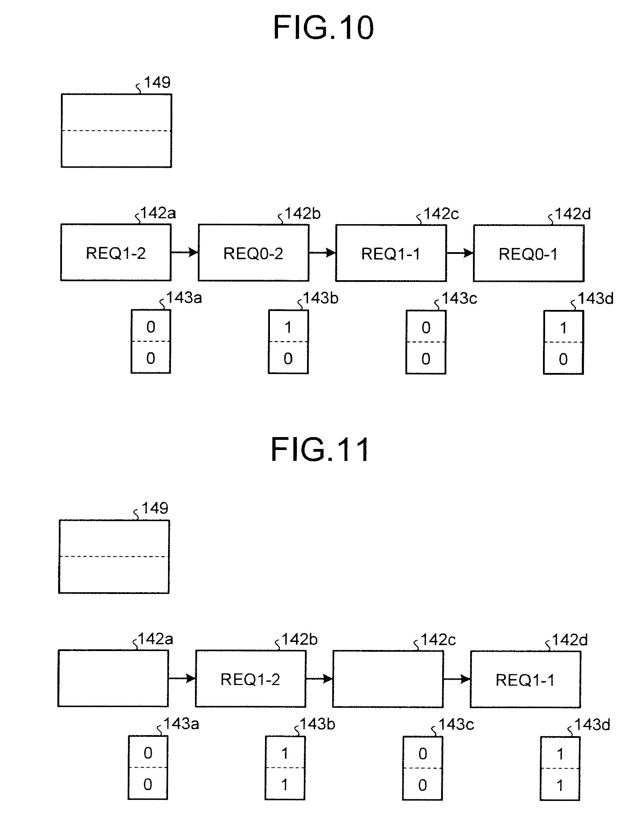

The pipeline process is executed concurrently on those requests. Consider a case when a cache miss occurs for the request 0-1 belonging to the thread TH0. In that case, the pipeline process for the thread TH0 is stalled as soon as the processing during the cycle R is performed on the request 0-1 in a clock 6. At that time, the request 0-2 belonging to the same thread TH0 is under processing during the cycle M. Thus, at the completion of the clock 6, "1" is set in the valid bit RW0 in the wait port 143d, which corresponds to the cycle R processing unit 142d to which the request 0-1 has been input, as illustrated in FIG. 10. Moreover, "1" is set in the valid bit MW0 in the wait port 143b that corresponds to the cycle M processing unit 142b in which the request 0-2 has been input. At the same time, the cycle R processing unit 142d outputs to the instruction control unit 130 a busy signal 0 indicating that the pipeline process for the thread TH0 is stalled.

Meanwhile, at this point, the pipeline process for the thread TH1 is not stalled and the requests corresponding to the thread TH1 are continually processed. However, consider a case when a cache miss occurs for the request 1-1 belonging to the thread TH1. In that case, the pipeline process for the thread TH1 is stalled as soon as the processing during the cycle R is performed on the request 1-1 in a clock 7. At that time, the request 1-2 belonging to the same thread TH1 is under processing during the cycle M. Thus, at the completion of the clock 7, "1" is set in the valid bit RW1 in the wait port 143d, which corresponds to the cycle R processing unit 142d in which the request 1-1 has been input, as illustrated in FIG. 11. Moreover, "1" is set in the valid bit MW1 in the wait port 143b that corresponds to the cycle M processing unit 142b in which the request 1-2 has been input. At the same time, the cycle R processing unit 142d outputs to the instruction control unit 130 a busy signal 1 indicating that the pipeline process for the thread TH1 is stalled.

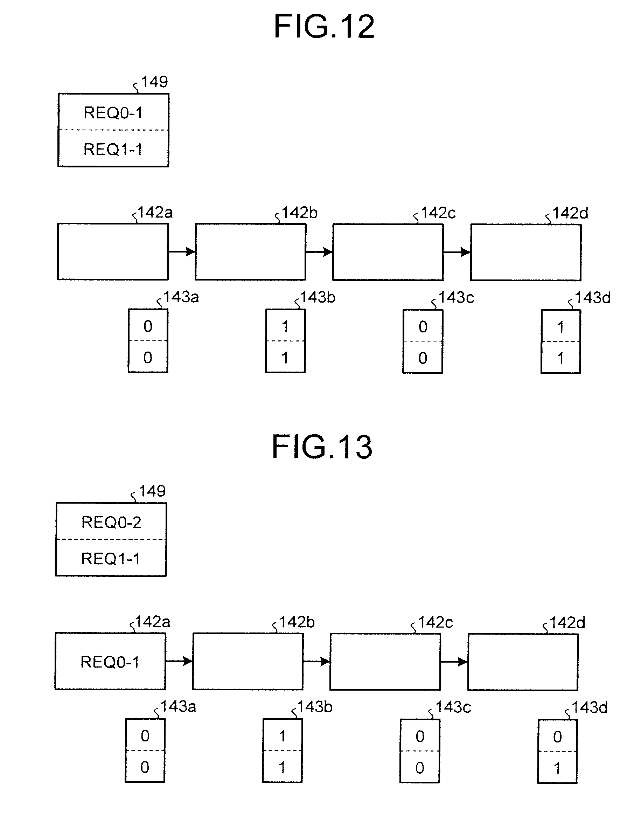

After a predetermined time (herein, five clocks) elapses since the pipeline process for the thread TH0 is stalled, the request storing unit 148 refers to the valid bits TW0, MW0, BW0, and RW0 stored in the wait ports 143a to 143d, respectively, and stores in the register unit 149 the request 0-1 as the earliest request belonging to the thread TH0 that has been fed to the pipeline process. Then, the request storing unit 148 refers to the valid bits TW1, MW1, BW1, and RW1 stored in the wait ports 143a to 143d, respectively, and stores in the register unit 149 the request 1-1 as the earliest request belonging to the thread TH1 that has been fed to the pipeline process. That is, since, in a clock 12, "1" is set in the valid bits MW0, RW0, MW1, and RW1 as illustrated in FIG. 12; the requests 0-1 and 1-1 corresponding to the valid bits RW0 and RW1, respectively, are stored in the register unit 149 according to the table illustrated in FIG. 4.

Moreover, since, in the clock 12, "1" is set in the valid bits MW0, RW0, MW1, and RW1 from among the valid bits stored in the wait ports 143a to 143d; a bit of value "1" is stored in each of the register units 144b-0 and 144b-1. Herein, it is assumed that a bit of value "1" is stored in the register unit for previous output 144c. Consequently, in the priority determining operation in the clock 12, the requests belonging to the thread TH0 are determined as target requests for re-feeding to the pipeline processing unit. Then, in a clock 13, the processing during the cycle T on the request 0-1 starts (see FIG. 13).

At that time, no request belonging to the thread TH0 is stored the register unit 149. Thus, the request storing unit 148 refers to the valid bits TW0, MW0, BW0, and RW0 stored in the wait ports 143a to 143d, respectively, and, stores the request 0-2 in the register unit 149 because "1" is set in the valid bit MW0. That is, since, in the clock 13, "1" is set in the valid bits MW0, MW1, and RW1 as illustrated in FIG. 13; the requests 0-2 and 1-1 corresponding to the valid bits MW0 and RW1, respectively, are stored in the register unit 149 according to the table illustrated in FIG. 4.

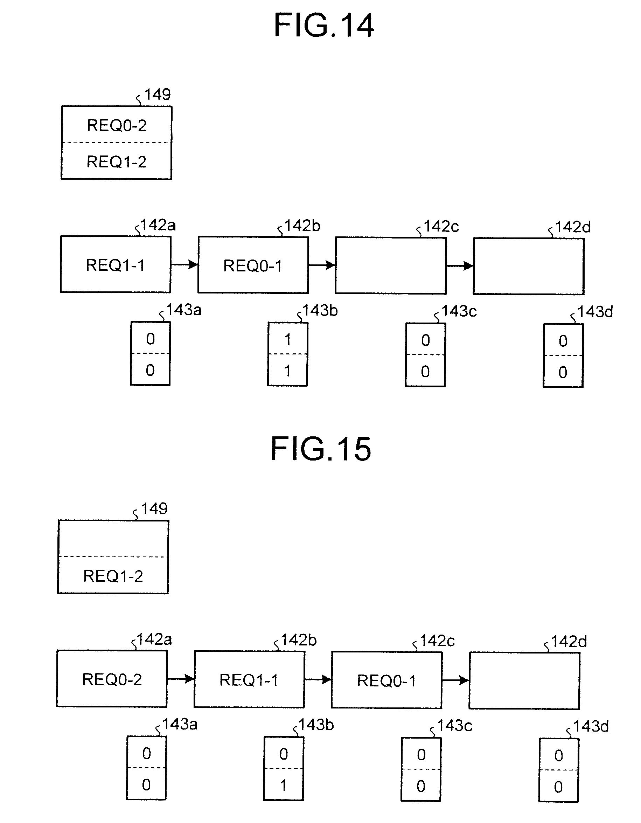

Moreover, since, in the clock 13, "1" is set in the valid bits MW0, MW1, and RW1 from among the valid bits stored in the wait ports 143a to 143d; a bit of value "1" is stored in each of the register units 144b-0 and 144b-1. Furthermore, since the select signal TH0 indicating selection of the thread TH0 has been output in the clock 12, a bit of value "0" is stored in the register unit for previous output 144c. Thus, in the priority determining operation in the clock 13, the requests belonging to the thread TH1 are determined as target requests for re-feeding to the pipeline processing unit. Then, in the clock 13, the processing during the cycle T on the request 1-1 starts (see FIG. 14). In this way, the requests belonging to the thread TH1 are re-fed to the pipeline processing unit in the clock 13 and the priority determining unit 144 resets the valid bit RW1 stored in the wait port 143d to "0".

At that time, no request belonging to the thread TH1 is stored the register unit 149. Thus, the request storing unit 148 refers to the valid bits TW1, MW1, BW1, and RW1 stored in the wait ports 143a to 143d, respectively, and, stores the request 1-2 in the register unit 149 because "1" is set in the valid bit MW1. That is, since, in a clock 14, "1" is set in the valid bits MW0 and MW1 as illustrated in FIG. 14; the requests 0-2 and 1-2 corresponding to the valid bits MW0 and MW1, respectively, are stored in the register unit 149 according to the table illustrated in FIG. 4.

Moreover, since, in the clock 14, "1" is set in the valid bits MW0 and MW1 from among the valid bits stored in the wait ports 143a to 143d; a bit of value "1" is stored in each of the register units 144b-0 and 144b-1. Furthermore, since the select signal TH1 indicating selection of the thread TH1 has been output in the clock 13, a bit of value "1" is stored in the register unit for previous output 144c. Thus, in the priority determining operation in the clock 14, the requests belonging to the thread TH0 are determined as target requests for re-feeding to the pipeline processing unit. Then, in a clock 15, the processing during the cycle T on the request 0-2 starts (see FIG. 15). In this way, the requests belonging to the thread TH0 are re-fed to the pipeline processing unit in the clock 14 and the priority determining unit 144 resets the valid bit MW0 stored in the wait port 143b to "0".

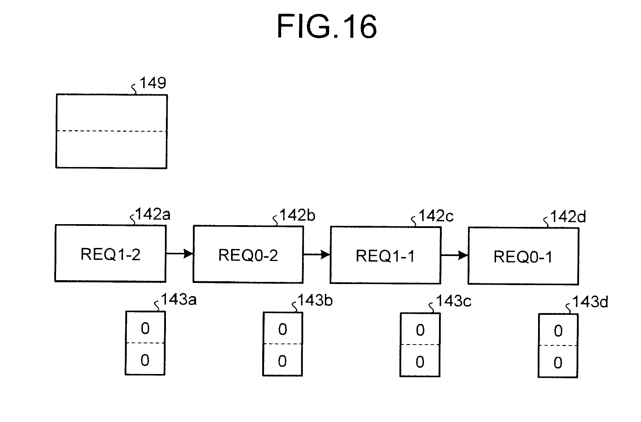

In the clock 15, since "1" is set in only the valid bit MW1 from among the valid bits stored in the wait ports 143a to 143d, a bit of value "1" is stored in only the register unit 144b-1 for the thread TH1. Thus, in the priority determining operation in the clock 15, the requests belonging to the thread TH1 are determined as target requests for re-feeding to the pipeline processing unit. Then, in a clock 16, the processing during the cycle T on the request 1-2 starts (see FIG. 16). In this way, the requests belonging to the thread TH1 are re-fed to the pipeline processing unit in the clock 15 and the priority determining unit 144 resets the valid bit MW1 stored in the wait port 143b to "0".

Thus, as illustrated in FIG. 16, "0" gets set in all of the valid bits stored in the wait ports 143a to 143d and the requests under processing at the time of stalling are re-fed in the same sequence to the pipeline processing unit. As a result, even if the pipeline process for a particular thread is stalled while executing the pipeline process concurrently on requests belonging to a plurality of threads, the instructions corresponding to the requests can be properly output to the instruction control unit 130 while adhering to the sequence of requests in each thread. Moreover, the wait ports 143a to 143d are used to store the valid bits corresponding to each thread. Because of that, even if the pipeline process for a particular thread is stalled, the processing of the requests belonging to the other threads that have already been fed to the pipeline processing unit can be continually performed. That enables achieving enhancement in the processing efficiency in a reliable manner.

In this way, according to the present embodiment, for each of a plurality of operations constituting a pipeline process, a wait port holds thread-specific valid bits indicating whether the pipeline process for any of a plurality of threads is stalled. Based on the valid bits, a sequence of requests belonging to a stalled thread to be re-fed to a pipeline processing unit is determined. Moreover, it is determined whether to give priority to requests belonging to a plurality of threads or to requests input newly from outside. That makes it possible to manage re-feeding of thread-specific requests. As a result, even if the pipeline process for a particular thread is stalled, the processing of the other threads for which the pipeline process has already been started is performed without interruption. That enables achieving enhancement in the processing efficiency in a reliable manner.

### INDUSTRIAL APPLICABILITY

In this way, the present invention is suitable in reliably enhancing the processing efficiency when a pipeline process is executed on a plurality of threads.

## Claims

1. A cache control apparatus that executes a pipeline process on requests belonging to a plurality of threads and outputs request-specific cache data, the cache control apparatus comprising:
a plurality of processing units, each performing, in a mutually independent manner, corresponding processing that constitutes a pipeline process of outputting cache data with respect to requests belonging to a plurality of threads;
a plurality of holding units, each being disposed corresponding to one of the processing units and each holding a thread-specific valid bit that corresponds to a request under processing in the corresponding processing unit and that indicates whether a pipeline process for a thread to which the request under processing belongs is stalled;
a storing unit that sequentially stores in a register a request that is under processing in the processing unit corresponding to the holding unit holding a valid bit that indicates pipeline process stalling; and
a feeding unit that determines a priority for the request stored in the register by the storing unit and a request newly input from outside, and feeds either one of stored request and newly input request to the plurality of processing units.

2. The cache control apparatus according to claim 1, wherein, based on the valid bits held by the plurality of holding units, the storing unit stores in the register a request belonging to a thread for which a pipeline process is stalled according to an order in which the request has been fed to the plurality of processing units.

3. The cache control apparatus according to claim 1, wherein the feeding unit includes
a latching unit that latches, for each thread, the valid bits held by the plurality of holding units; and
a determining unit that, according to the valid bits latched by the latching unit and a request fed at a previous time to the plurality of processing units, determines a request to be fed this time to the plurality of processing units.

4. The cache control apparatus according to claim 3, wherein, when none of the valid bits latched for each thread by the latching unit indicate pipeline process stalling, the determining unit determines that a request that is newly input from outside is to be fed to the plurality of processing units.

5. The cache control apparatus according to claim 3, wherein, when the valid bits latched for a single thread by the latching unit include a valid bit indicating pipeline process stalling, the determining unit determines that a request that belongs to the single thread and that is stored in a register by the storing unit is to be fed to the plurality of processing units.

6. The cache control apparatus according to claim 3, wherein, when the valid bits latched for a plurality of threads by the latching unit include a valid bit indicating pipeline process stalling, the determining unit determines that, from among the plurality of threads, a request belonging to a thread that is different than a thread to which a request fed at a previous time to the plurality of processing units belongs is to be fed to the plurality of processing units.

7. The cache control apparatus according to claim 3, wherein, when the valid bits latched for a plurality of threads by the latching unit include a valid bit indicating pipeline process stalling, the determining unit determines that, from among the plurality of threads, a request belonging to a thread that has longest elapsed time since a request belonging thereto was previously fed to the plurality of processing units is to be fed to the plurality of processing units.

8. The cache control apparatus according to claim 1, wherein
the storing unit includes a memory unit that stores therein, by thread and to a number of the plurality of processing units, a request that has been fed to the plurality of processing units, and stores in the register, by outputting from the memory unit, a request whose corresponding valid bit indicating pipeline process stalling, in sequence starting from a request that has been initially input to the plurality of processing units.

9. A cache control method for executing a pipeline process on requests belonging to a plurality of threads and outputting request-specific cache data, the cache control method comprising:
a plurality of steps of processing operations, each in a mutually independent manner, that constitute a pipeline process of outputting cache data with respect to requests belonging to a plurality of threads;
a step of setting, if a pipeline process for a thread is stalled when a request belonging to the thread has reached last of the plurality of steps of processing, a thread-specific valid bit indicating pipeline process stalling in a wait port, from among a plurality of wait ports each corresponding to one of the plurality of steps of processing, that corresponds to a step of processing at which a request belonging to the thread for which the pipeline process is stalled is under processing;
a step of storing, when a valid bit indicating pipeline process stalling is set at the step of setting, a request that is under processing at a step of processing corresponding to a wait port in which the valid bit is set in a register in a sequential manner; and
a step of controlling that includes determining a priority for the request stored in the register at the step of storing and a request newly input from outside, and starting the plurality of steps of processing with respect to either one of stored request and newly input request.
